(19) Europäisches Patentamt
European Patent Office
Office européen des brevets

(11) **EP 2 707 944 B1**

(12) **EUROPÄISCHE PATENTSCHRIFT**

(45) Veröffentlichungstag und Bekanntmachung des Hinweises auf die Patenterteilung:
**08.05.2019 Patentblatt 2019/19**

(21) Anmeldenummer: **11711872.9**

(22) Anmeldetag: **30.03.2011**

(51) Int Cl.:
**H02M 7/49** *(2007.01)*

(86) Internationale Anmeldenummer:
**PCT/EP2011/054898**

(87) Internationale Veröffentlichungsnummer:
**WO 2012/130296 (04.10.2012 Gazette 2012/40)**

(54) **HYBRIDUMRICHTER UND VERFAHREN ZU SEINER REGELUNG**

HYBRID CONVERTER AND METHOD FOR CONTROLLING SAID HYBRID CONVERTER

CONVERTISSEUR HYBRIDE ET PROCÉDÉ POUR LA RÉGULATION DUDIT CONVERTISSEUR HYBRIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**19.03.2014 Patentblatt 2014/12**

(73) Patentinhaber: **Siemens Aktiengesellschaft 80333 München (DE)**

(72) Erfinder: **PEREIRA, Marcos 91056 Erlangen (DE)**

(56) Entgegenhaltungen:
**WO-A1-2007/028349**

- **TRAINER D R ET AL: "B4-111 A new Hybrid Voltage-Sourced Converter for HVDC Power Transmission", CIGRE SESSION 2010, CIGRE, PARIS, FR, 23. August 2010 (2010-08-23), Seiten 1-12, XP008134692,**
- **QAHRAMAN B ET AL: "Hybrid HVDC Converters and Their Impact on Power System Dynamic Performance", 2006 IEEE POWER ENGINEERING SOCIETY GENERAL MEETING; 18-22 JUNE 2006; MONTREAL, QUE., CANADA, IEEE, PISCATAWAY, NJ, USA, 18. Juni 2006 (2006-06-18), Seiten 1-6, XP010942806, ISBN: 978-1-4244-0493-3**
- **HONGBO JIANG ET AL: "HARMONIC CANCELLATION OF A HYBRID CONVERTER", IEEE TRANSACTIONS ON POWER DELIVERY, IEEE SERVICE CENTER, NEW YORK, NY, US, Bd. 13, Nr. 4, 1. Oktober 1998 (1998-10-01), Seiten 1291-1296, XP011049590, ISSN: 0885-8977, DOI: 10.1109/61.714498**
- **GEMMELL B ET AL: "Prospects of multilevel VSC technologies for power transmission", TRANSMISSION AND DISTRIBUTION CONFERENCE AND EXPOSITION, 2008. T&D. IEEE/PES, IEEE, PISCATAWAY, NJ, USA, 21. April 2008 (2008-04-21), Seiten 1-16, XP031250215, ISBN: 978-1-4244-1903-6**

EP 2 707 944 B1

**Beschreibung**

Die betrifft einen Hybridumrichter zum Übertragen einer elektrischen Leistung zwischen einem Wechselspannungsnetz und einem Gleichspannungsnetz mit einem netzgetakteten Umrichter, dessen Leistungshalbleiterschalter zum einmaligen Schalten in einer Periode einer Wechselspannung des Wechselspannungsnetzes eingerichtet sind und der mit einer Anschlusseinheit zum Anschluss des Wechselspannungsnetzes verbunden ist, und einem ebenfalls mit dem besagten Wechselspannungsnetz verbindbaren selbstgeführten Umrichter, der Phasenmodulzweige mit sowohl ein- als auch abschaltbaren Leistungshalbleiterschaltern aufweist und der mit dem netzgeführten Umrichter in Reihe geschaltet ist.

Die Erfindung betrifft ferner ein Verfahren zum Übertragen elektrischer Leistung zwischen einem Wechselspannung führenden Wechselspannungsnetz und einem Gleichspannungsnetz, bei dem Leistungshalbleiterschalter eines netzgetakteten Umrichters in einer Periode der Wechselspannung einmal von einer Sperrstellung, in der ein Stromfluss über den Leistungshalbleiterschalter unterbrochen ist, in eine Durchgangsstellung überführt werden, in der eine Stromfluss über den Leistungshalbleiter ermöglicht ist, und bei dem ein in Reihe zum netzgetakteten Umrichter angeordneter selbstgeführter Umrichter, der mit dem gleichen Wechselspannungsnetz verbunden ist, Strom- und Spannungskomponenten mit einer Frequenz, die ein ganzzahliges Vielfaches der Grundschwingung der Wechselspannung ist, unterdrückt.

Ein solcher Umrichter und eine solchen Verfahren sind beispielsweise aus dem in "IEEE Transactions on Power Delivery, Band 13, Nr. 4, Oktober 1998" erschienenen Beitrag "Harmonik Cancellation of A Hybrid Converter" von Åke Ektröm und Hongbo Jiang bereits bekannt. Der dort offenbarte Hybridumrichter ist für die Hochspannungsgleichstromübertragung (HGÜ) vorgesehen und weist einen netzgeführten Umrichter sowie einen selbstgeführten Umrichter auf, die in Reihe miteinander verbunden sind. Der netzgeführte Umrichter weist Stromrichterventile auf, die aus Thyristoren bestehen. Thyristoren können durch ein Zündsignal aktiv von einem nichtleitenden Zustand in einen leitenden Zustand überführt werden. Ein aktives Überführen der Thyristoren in ihre Sperrstellung, in der ein Stromfluss über die Thyristoren verhindert ist, ist nicht möglich. Die Abschaltung der Thyristoren erfolgt vielmehr passiv in Folge der vom Wechselspannungsnetz bereitgestellten Wechselspannung, die an dem Wechselspannungsanschluss des Umrichters anliegt und die dafür sorgt, dass der über den jeweiligen Thyristor fließende Strom unter dessen Haltestrom absinkt, wodurch der Thyristor in seine Sperrstellung überführt wird.

Im Gegensatz dazu weisen selbstgeführte Umrichter Leistungshalbleiterschalter auf, die sowohl ein- als auch abgeschaltet werden können. Solche Leistungshalbleiterschalter sind beispielsweise "Isolated Bipolar Transistors" oder auch kurz IGBTs, denen eine Freilaufdiode gegensinnig parallel geschaltet ist. Die Gleichspannungsklemmen des selbstgeführten Umrichters sind mit einem zentralen Energiespeicher verbunden, so dass der Umrichter wie eine Spannungsquelle wirkt. Er wird deshalb auch als "Voltage Source Converter" oder kurz VSC bezeichnet.

Ekström et al. regeln den selbstgeführten Umrichter mit Hilfe einer Pulweitenmodulation, so dass harmonische Oberschwingungen der Grundschwingung kompensiert werden, die von dem netzgeführten Umrichter zwangsläufig erzeugt werden. Der selbstgeführte Umrichter wirkt daher wie ein aktiver Filter.

Auch aus dem Beitrag von B. Qaharaman, A. M. Gole und L. T. Fernando "Hybrid HVDC Converters and Their Impact on Power System Dynamic Performance", 2006 Power Engineering Society General Meeting, ist ein netzgeführter Umrichter in Reihenschaltung zu einem selbstgeführten Umrichter bekannt. Der Hybridumrichter gemäß Qahraman wird sowohl zum Unterdrücken von harmonischen Oberschwingungen der Grundschwingung als auch zur Blindleistungskompensation eingesetzt.

Aus dem Beitrag von B. R. Andersen und Lie Xu "Hybrid HVDC System for Power Transmission to Island Networks", IEEE Transaction on Power Delivery, Bd. 19, Nr. 4, Oktober 2004, ist ein netzgeführter Zwölf-Puls-Umrichter offenbart, der wechselspannungsseitig mit einem selbstgeführten Umrichter verbunden ist. Der so aufgebaute Hybridumrichter dient zur Energieversorgung von Inselnetzen mittels der Hochspannungsgleichstromübertragung, wobei ein netzgeführter Umrichter verwendet wird. Damit der Strom im netzgeführten Umrichter von einem zum anderen Stromrichterventil kommutiert und somit ein passives Abschalten der Thyristoren erfolgt, wird die vom selbstgeführten Umrichter erzeugte Spannung eingesetzt.

In dem Beitrag "Shunt-series Active Power Filter for Rectifiers AC and DC Sides", von P. G. Barbosa, J. A. Santisteban und E. H. Watanabe, IEE Proceedings Electric Power Applications, Bd. 145, Nr. 6, November 1998 ist eine Anlage zur Hochspannungsgleichstromübertragung (HGÜ) beschrieben. Die HGÜ-Anlage weist einen netzgeführten Umrichter mit Thyristorventilen auf, der mit einem Wechselspannungsnetz verbunden und an ein Gleichspannungsnetz angeschlossen ist. Ferner sind mehrere selbstgeführte Umrichter vorgesehen, die je nach Einsatzart als aktive Filter zur Kompensation von harmonischen Oberschwingungen der Grundschwingung auf der Wechselspannungsseite oder auf der Gleichspannungsseite dienen. Bei den selbstgeführten Umrichtern handelt es sich um so genannte Zwei-Stufen-Umrichter. Sollen Oberschwingungen sowohl auf der Gleichspannungsseite als auch auf der Wechselspannungsseite unterdrückt werden, sind zwei selbstgeführte Umrichter vorgeschlagen. Die beiden Umrichter können durch einen Gleichspannungszwischenkreis miteinander verbunden werden.

Nachteilig bei den aus dem Stand der Technik bekannten Hybridumrichtern ist, dass zur Kompensation von Oberschwingungen sowohl auf der Wechselspannungsseite als auch auf der Gleichspannungsseite zwei selbstgeführte Umrichter vorgesehen sind. Dies führt zu einem komplexen Aufbau der Gesamtanlage mit höheren Kosten im Gefolge und zu komplexen Regelungsverfahren.

Ein weiterer Hybridumrichter ist aus dem Beitrag "A New Hybrid Voltage-Sourced Converter for HVDC Power Transmission" von David R. Trainer et.al., erschienen in der CIGRE SESSION 2010, bekannt.

Aufgabe der Erfindung ist es, einen Hybridumrichter und eine Verfahren der eingangs genannten Art bereitzustellen, bei dem harmonische Oberschwingungen der Grundschwingung sowohl auf der Gleichspannungsseite als auch auf der Wechselspannungsseite des Hybridumrichters wirksam bedämpft werden können und der gleichzeitig einfach aufgebaut und somit kostengünstig ist.

Die Erfindung löst diese Aufgabe ausgehend von dem eingangs genannten Hybridumrichter dadurch, dass die Phasenmodulzweige des selbstgeführten Umrichters über eine Reihenschaltung von Submodulen verfügen, wobei jedes Submodul zwei Anschlussklemmen, einen Energiespeicher und eine Leistungshalbleiterschaltung aus ein- und abschaltbaren Leistungshalbleiterschaltern aufweist, die so ansteuerbar sind, dass die an dem Energiespeicher abfallende Spannung oder eine Nullspannung an den beiden Anschlussklemmen des jeweiligen Submoduls abfällt.

Ausgehend von dem eingangs genannten Verfahren löst die Erfindung die Aufgabe dadurch, dass der selbstgeführte Umrichter ein modularer Mehrstufenumrichter ist, mit dem die besagten Spannungskomponenten sowohl im Wechselspannungsnetz als auch im Gleichspannungsnetz unterdrückt werden.

Erfindungsgemäß weist der Hybridumrichter wenigstens einen netzgetakteten Umrichter mit Leistungshalbleiterschaltern auf, die in einer Periode der Grundschwingung des angeschlossenen Wechselspannungsnetzes nur einmal aktiv eingeschaltet werden. Beträgt die Frequenz der Grundschwingung der Wechselspannung beispielsweise 50 Hertz ergibt sich eine entsprechende Taktfrequenz für die Ansteuerung eines jeden ansteuerbaren Leistungshalbeierschalters des netzgetakteten Umrichters. Der selbstgeführte Umrichter verfügt sowohl über ein- als auch abschaltbare Leistungshalbleiterschalter. Beide Umrichter sind erfindungsgemäß mit dem gleichem Wechselspannungsnetz verbunden. Hierzu weist jeder Umrichter einen Wechselspannungsanschluss auf, der entweder mittels derselben oder unterschiedlicher Anschlusseinheiten mit dem gleichen Wechselspannungsnetz verbunden ist. Erfindungsgemäß ist der selbstgeführte Umrichter ein so genannter modularer Mehrstufenumrichter. Durch die modulare Ausgestaltung des Mehrstufenumrichters ist dieser in der Lage, im Bedarfsfall wesentlich schneller zu reagieren als dies bei den trägeren selbstgeführten Zwei-Stufen-Umrichtern der Fall ist. Diese weisen einen zentralen Speicherkondensator an ihren Gleichspannungsklemmen auf, so dass die Unterdrückung von Oberschwingungen auf der Gleichspannungsseite des gesamten Hybridumrichters mit dem gattungsgemäßen Hybridumrichter nicht möglich ist. Zwar stellen Watanabe et al. in dem eingangs genannten Beitrag eine Möglichkeit vor, mit der sowohl wechselspannungsseitig als auch gleichspannungsseitig Oberschwingungen unterdrückt werden. Hierzu sind jedoch zwei Umrichter vorgesehen, die jeweils mit einem zentralen Energiespeicher verbunden sind. Erfindungsgemäß ist kein zentraler Energiespeicher oder Speicherkondensator vorgesehen. Vielmehr weisen die Phasenmodulzweige jeweils eine Reihenschaltung aus Submodulen auf. Jedes dieser Submodule verfügt über seinen eigenen, im Vergleich zu dem zentralen Energiespeicher gemäß dem Stand der Technik kleineren Energiespeicher mit entsprechend geringer Kapazität. Der Energiespeichereinheit jedes Submoduls ist mit den Leistungshalbleiterschaltern des Submoduls so verschaltet, dass an den beiden Anschlussklemmen des Submoduls entweder eine Nullspannung, also die Spannung null, oder aber die an dem Energiespeicher abfallende Spannung erzeugt werden kann. Bei bestimmten Ausgestaltungen des Submoduls ist darüber hinaus auch die inverse Energiespeicherspannung an den Anschlussklemmen erzeugbar. In jedem Fall kann die an dem Phasenmodulzweig insgesamt abfallende Spannung stufenweise erhöht werden, wobei die Höhe der Stufen durch die an dem Energiespeicher abfallende Spannung bestimmt wird. Die Auslegung des Energiespeichers, beispielsweise die Kapazität eines unipolaren Speicherkondensators, ist beispielsweise von der Spannungsfestigkeit der jeweils eingesetzten Leistungshalbleiterschalter abhängig. Bei heute im Handel erhältlichen Leistungshalbleiterschaltern beträgt die Spannungsfestigkeit beispielsweise zwischen 1 kV und 10 kV. Bei Hochspannungsanwendungen weist jeder Phasenmodulzweig des selbstgeführten Umrichters beispielsweise mehrere hundert Submodule auf. Aufgrund dieser Verteilung des Energiespeichers von einem zentralen großen Energiespeicher zu hunderten kleiner in Reihe geschalteter Energiespeicher ist der selbstgeführte Umrichter in der Lage, Oberschwingungen sowohl auf der Wechselstromseite des Hybridumrichters als auch auf der Gleichspannungsseite des Hybridumrichters zu unterdrücken. Auch ein zusätzlicher aktiver Filter im Gleichspannungskreis, wie im Stand der Technik offenbart, ist somit im Rahmen der Erfindung überflüssig geworden. Die Erfindung ist somit vergleichsweise kostengünstig. Im Rahmen der Erfindung kann jeder Leistungshalbleiterschalter jedoch auch durch eine Reihenschaltung von Leistungshalbleiterschaltern ersetzt werden. Damit kann die Kapazität des Energiespeichers erhöht werden.

Da neben der Unterdrückung von Oberschwingungen eine vom netzgetakteten Umrichter geforderte Blindleistung zur Verfügung gestellt werden kann, können die Kosten für passive oder zusätzliche aktive Filter noch weiter reduziert werden. Selbstverständlich ist es im Rahmen der Erfindung auch möglich, dem Hybridumrichter zum Speisen so genannter Inselnetze einzusetzen, die keinen oder lediglich einen in seiner Wirkung vernachlässigbaren Energieerzeuger aufweisen.

Gemäß einer bevorzugten Ausgestaltung der Erfindung ist der netzgetaktete Umrichter ein netzgeführter Umrichter, der Stromrichterventile aus einschaltbaren, jedoch nicht abschaltbaren Leistungshalbleiterschaltern aufweist. Solche Leistungshalbleiter sind beispielsweise Thyristoren oder Triacs. Abweichend hiervon weist der netzgeführte Umrichter ebenfalls ein- und abschaltbare Leistungshalbleiterschalter, IGBTs, GTOs, IGCTs oder dergleichen, auf.

Vorteilhafterweise sind die Stromrichterventile des netzgetakteten Umrichters zu wenigstens einer Sechs-Puls-Brücke miteinander verschaltet, wobei jede Sechs-Puls-Brücke einen Wechselspannungsanschluss aufweist, der mit der Anschlusseinheit verbunden ist. Solche Sechs-Puls-Brücken sind dem Fachmann bestens bekannt, so dass auf deren Wirkungsweise und Auslegung an dieser Stelle nicht genauer eingegangen zu werden braucht.

Gemäß einer bevorzugten Ausgestaltung bilden die Stromrichterventile des netzgetakteten Umrichters zwei in Reihe zueinander angeordnete Sechs-Puls-Brücken aus, wobei jede Sechs-Puls-Brücke mit einem Wechselspannungsanschluss ausgerüstet ist, der mit der Anschlusseinheit verbunden ist. Gemäß dieser vorteilhaften Weiterentwicklung der Erfindung sind bei einem Hybridumrichter, der an ein dreiphasiges Wechselspannungsnetz angeschlossen werden soll, vorteilhafterweise zwei Sechs-Puls-Brücken vorgesehen, die in Reihe zueinander geschaltet sind. Jede dieser Sechs-Puls- oder Sechs-Puls-Brücken ist mit ihrem Wechselspannungsanschluss zweckmäßigerweise mit einer Sekundärwicklung eines als Anschlusseinheit wirkenden ersten Transformators verbunden, dessen Primärwicklung wiederum mit dem Wechselspannungsnetz verbunden ist. Die Sekundärwicklungen sind beispielsweise dreiphasige Sekundärwicklungen mit unterschiedlicher Verschaltung. So weist eine Sekundärwicklung beispielsweise eine Dreiecksschaltung auf, während die andere dreiphasige Sekundärwicklung einen Sternpunkt ausbildet. Aufgrund dieser unterschiedlichen Verschaltung kommt es an den Wechselspannungsanschlüssen der Sechs-Puls-Brücken zu einer Phasenverschiebung bei der anliegenden Wechselspannung. Durch diese Phasenverschiebung an den in Reihe geschalteten Sechs-Puls-Brücken ist eine Zwölf-Puls-Brückenschaltung realisiert. Eine solche Zwölf-Puls-Brückenschaltung ist aus dem Stand der Technik bekannt, so dass an dieser Stelle auf deren Ausgestaltung nicht genauer eingegangen zu werden braucht. Gemäß einer vorteilhaften Weiterentwicklung sind auch die Phasenmodulzweige des selbstgeführten Umrichters zu einer Sechs-Puls-Brücke miteinander verschaltet, wobei sich jeder Phasenmodulzweig zwischen einem Wechselspannungsanschluss und einer Gleichspannungsklemme des selbstgeführten Umrichters erstreckt. Der selbstgeführte Umrichter, der erfindungsgemäß als modularer Mehrstufenumrichter ausgebildet ist, wird oftmals als so genannter "Voltage Source Converter" oder kurz VSC bezeichnet. Die sich zwischen dem Wechselspannungsanschluss und einer Gleichspannungsklemme erstreckenden Phasenmodulzweige werden daher nicht wie bei einem netzgeführten Umrichter Stromrichterventile sondern Phasenmodulzweige genannt. Sie wirken nicht wie Ventile bzw. wie Schalter sondern stellen eher eine Spannungsquelle bereit. Auch die Phasenmodulzweige können zu einer Sechs-Puls-Brücke verschaltet sein. Ist der Hybridumrichter zum Anschluss an ein dreiphasiges Wechselspannungsnetz vorgesehen, bilden die Phasenmodulzweige miteinander eine so genannte Sechs-Puls-Brückenschaltung aus, die wechselspannungsseitig mit dem Wechselspannungsnetz verbindbar ist und zwei Gleichspannungsklemmen zum Anschluss der Pole beziehungsweise eines Erdanschlusses aufweist.

Gemäß einer weiteren Ausgestaltung der Erfindung ist der Wechselspannungsanschluss des selbstgeführten Umrichters mit einer Sekundärwicklung eines zweiten Transformators verbunden. Gemäß dieser vorteilhaften Weiterentwicklung des erfindungsgemäßen Hybridumrichters sind zwei Transformatoren vorgesehen. Ein erster Transformator dient zum Anschluss des netzgeführten Umrichters an das Wechselspannungsnetz. Der zweite Transformator hingegen ist mit dem selbstgeführten Umrichter einerseits sowie mit dem gleichen Wechselspannungsnetz verbunden. Abweichend hiervon ist es jedoch möglich, dass lediglich ein für beide Teilumrichter des Hybridumrichters gemeinsamer Transformator als Anschlusseinheit dient. Der gemeinsame Transformator weist dann eine mit dem Wechselspannungsnetz verbindbare Primärwicklung zwei Sekundärwicklungen und vorzugsweise drei Sekundärwicklungen, auf. Die Sekundärwicklungen sind dann mit den Wechselspannungsanschlüssen der jeweiligen Umrichter, also deren Sechs-Puls-Brücke (n), verbunden.

Die Submodule des selbstgeführten Umrichters können im Rahmen der Erfindung beispielsweise als so genannte Halbbrückenschaltung oder aber als Vollbrückenschaltung ausgebildet sein. Bei der Halbbrückenschaltung ist dem Energiespeicher lediglich eine Reihenschaltung aus zwei ein- und abschaltbaren Leistungshalbleitern, wie beispielsweise IGBTs, GTOs, IGCTs oder dergleichen, parallel geschaltet. Eine weitere Anschlussklemme ist direkt mit einer Klemme des Energiespeichers, beispielsweise einem Pol eines unipolaren Speicherkondensators verbunden, wohingegen die andere Anschlussklemme an den Potenzialpunkt zwischen den ein- und abschaltbaren Leistungshalbleiterschaltern der Leistungshalbleiterreihenschaltung angeschlossen ist. Jedem steuerbaren Leistungshalbleiterschalter ist eine Freilaufdiode gegensinnig parallel geschaltet. Ein solcher Mehrstufenumrichter ist jedoch beispielsweise aus der DE 101 03 031 bekannt.

Die Submodule können jedoch auch als so genannte Vollbrücken- oder H-Schaltung ausgebildet sein. In diesem Falle weist jedes Submodul vier Leistungshalbleiterschalter auf. Dem Energiespeicher sind dann nicht nur eine Reihenschaltung, sondern zwei Reihenschaltungen parallel geschaltet, wobei jede Reihenschaltung wiederum zwei Leistungshalbleiterschalter aufweist, die ein- und abschaltbar sind. Jedem dieser Leistungshalbleiterschalter ist eine Freilaufdiode gegensinnig parallel geschaltet. Eine erste Anschlussklemme ist mit dem Potenzialpunkt zwischen den Leistungshalbleiterschaltern der ersten Reihenschaltung verbunden, wohingegen die zweite Anschlussklemme mit dem Potenzialpunkt zwischen den Leistungshalbleiterschaltern der zweiten Reihenschaltung verbunden ist. Ein Umrichter mit solchen Submodulen ist beispielsweise aus der US 5,642,275 bekannt. Je nach Ansteuerung der ansteuerbaren Leistungshalbleiterschalter kann entweder die an dem Energiespeicher abfallende Spannung eine Nullspannung oder aber die inverse Energiespeicherspannung an den Anschlussklemmen erzeugt werden.

Weitere zweckmäßige Ausgestaltungen und Vorteile der Erfindung sind Gegenstand der nachfolgenden Beschreibung von Ausführungsbeispielen der Erfindung unter Bezug auf die Figuren der Zeichnung, wobei gleiche Bezugszeichen auf gleich wirkende Bauteile verweisen und wobei

Figur 1        ein Ausführungsbeispiel eines netzgeführten Umrichters gemäß dem Stand der Technik,

Figur 2        ein Ausführungsbeispiel des erfindungsgemäßen Hybridumrichters,

Figuren 3 und 4        Phasenmodulzweige des selbstgeführten Umrichters gemäß Figur 2 ohne deren Drosseln,

Figur 5        den selbstgeführten Umrichter aus Figur 2 mit den an den Phasenmodulzweigen abfallenden Spannungen,

Figur 6        einen Stromkreis des selbstgeführten Umrichters gemäß Figur 2,

Figuren 7, 8, 9        mögliche Regelungsszenarien schematisch,

Figur 10        ein weiteres Ausführungsbeispiel des erfindungsgemäßen Hybridumrichters und

Figur 11        noch ein weiteres abweichendes Ausführungsbeispiel des erfindungsgemäßen Hybridumrichters zeigen.

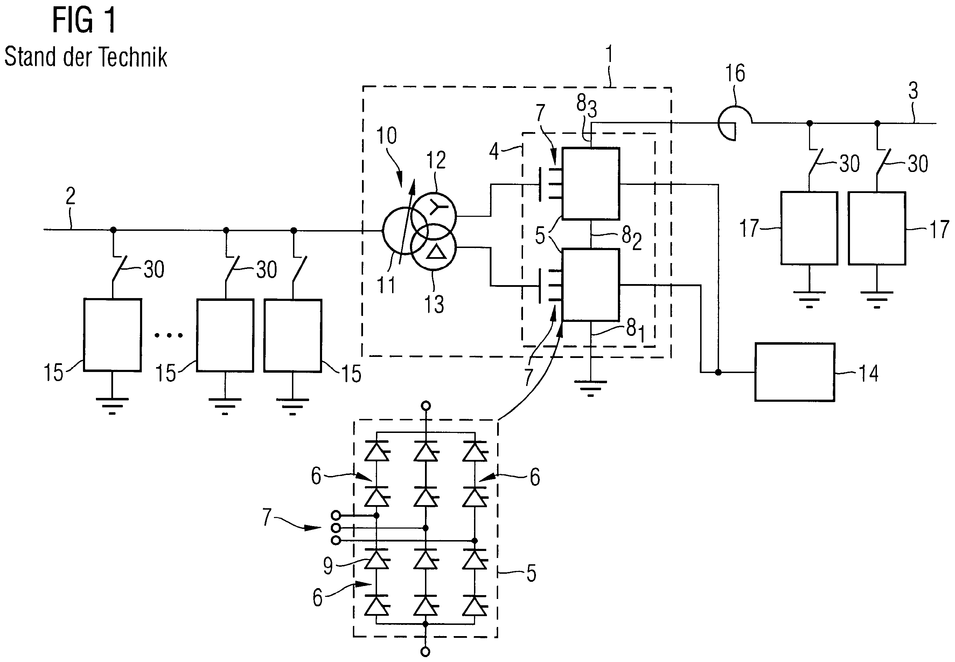

Figur 1 zeigt eine Umrichterstation 1 einer so genannten Hochspannungsgleichstromübertragungs(HGÜ)-anlage, die ein Wechselspannungsnetz 2 mit einem ein- oder zweipoligen Gleichstromkreis 3 verbindet. Die Umrichterstation 1 besteht aus einem netzgeführten Umrichter 4, der aus zwei in Reihe geschalteten Sechs-Puls-Brücken 5 zusammengesetzt ist, deren Topologie in der angedeuteten Vergrößerung genauer dargestellt ist. Jede Sechs-Puls-Brücke verfügt über sechs Stromrichterventile 6, die sich jeweils zwischen einem Wechselspannungsanschluss 7 sowie einer Gleichspannungsklemme $8_1$ beziehungsweise $8_2$ erstrecken. Dabei ist jede Sechs-Puls-Brücke 5 für Hochspannungen bis beispielsweise 500 kV ausgelegt. Zur Beherrschung dieser hohen Spannungen ist eine ausreichende Anzahl von Leistungshalbleiterschaltern 9 in Reihe geschaltet, die in dem gezeigten Ausführungsbeispiel zwar einschaltbar, jedoch nicht aktiv abschaltbar sind. Im Beispiel von Figur 1 handelt es sich bei den Leistungshalbleiterschaltern um Thyristoren. Bei dem in Figur 1 gezeigten Wechselspannungsnetz 2 handelt es sich um ein dreiphasiges Wechselspannungsnetz 2, wobei jedoch aus Gründen der Übersichtlichkeit lediglich eine Phase dargestellt ist. Die beiden Graetzbrücken 5 des netzgeführten Umrichters 4 sind in Reihe zueinander angeordnet.

Die Umrichterstation 1 umfasst ferner einen Transformator 10, der eine mit dem Wechselspannungsnetz 2 verbundene Primärwicklung 11 sowie zwei Sekundärwicklungen 12 und 13 aufweist. Die Primär- und Sekundärwicklungen sind ebenfalls dreiphasig ausgebildet, wobei die Sekundärwicklung 12 einen Sternpunkt ausbildet. Die Sekundärwicklung 13 bildet hingegen eine Dreiecksschaltung aus. Aufgrund dieser unterschiedlichen Verschaltung der Sekundärwicklungen 12, 13 kommt es an den Wechselspannungsanschlüssen 7 der Sechs-Puls-Brücken 5 zu einer Phasenverschiebung der anliegenden Wechselspannung zueinander, so dass durch die beiden in Reihe geschalteten Sechs-Puls-Brücken 5 insgesamt ein so genannter netzgeführter Zwölf-Puls-Umrichter 4 bereitgestellt ist. Der Strom und die Spannung im Gleichstromkreis 3 werden durch den Steuerwinkel, also den Zeitpunkt der Zündung der Thyristoren in Bezug auf die anliegende Wechselspannung, geregelt. Der Steuerwinkel wird auch als Zündwinkel $\alpha$ oder Löschwinkel $\gamma$ bezeichnet. Zum Einstellen des Steuerwinkels dient eine Schutz- und Regelungseinheit 14.

Dem in Figur 1 schematisch dargestellten vorbekannten netzgeführten Umrichter 4 haftet der Nachteil an, dass dieser bedingt durch seine Funktionsweise eine große Blindleistung benötigt, die von dem Wechselspannungsnetz 2 bereitgestellt werden muss. Die Blindleistung steigt mit der übertragenen Wirkleistung sowie mit dem Zünd- beziehungsweise Löschwinkel der Thyristoren 9 an. Ein weiterer Nachteil besteht darin, dass es beim Betrieb des Umrichters 4 zu einer Verzerrung des Stromes und der Spannung aufgrund harmonischer Strom- und Spannungskomponenten sowohl auf der Wechselspannungs- als auch auf der Gleichspannungsseite kommt. Auch die Energieversorgung eines so genannten Inselnetzes ist mit netzgeführten Umrichtern 4, wie der in Figur 1 gezeigt ist, nur schwer möglich, da das Inselnetz keine ausreichend starke Spannungsquelle aufweist, um für die Kommutierung des Stromes von dem einen auf das andere Stromrichterventil 6 zu bewirken.

Um die Blindleistung, die durch den Umrichter 4 verbraucht wird und um harmonische Oberschwingungen auf der Wechselspannungsseite des Umrichters 4 zu kompensieren, sind auf der Wechselspannungsseite daher aufwändige Anordnungen von Kondensatorbänken mit Saugkreisen, beispielsweise in Form passiver oder aktiver Filter 15, vorgesehen, die über Schalter 30 mit dem Wechselspannungsnetz 2 verbindbar sind.

Um den Betriebspunkt des Umrichters 4 zu optimieren und insbesondere zu vermeiden, dass die verbrauchte Blindleistung durch den Betrieb des Umrichters 4 mit ungünstigen Steuerwinkeln ($\alpha,\gamma$) ansteigt, werden die Transformatoren mit aufwändigen Laststufenschaltern ausgestattet. Dies ermöglicht eine Optimierung der Wechselspannung auf der Wechselspannungsseite der Graetzbrücken 5, so dass diese mit einem Zündwinkel betrieben werden können, der eine möglichst geringe Blindleistung vom Wechselspannungsnetz 2 fordert. Dieser Stufenschalter ist mit einem Pfeil in der Primärwicklung 11 des ersten Transformators 10 angedeutet.

Um die Welligkeit des Stromes auf der Gleichspannungsseite des Umrichters 4 zu begrenzen, wird der Gleichstromkreis 3 mit einer aufwändigen Glättungsdrossel 16 ausgestattet. Um harmonische Oberschwingungen der Grundschwingung als Stromkomponenten im Gleichstromnetz 3 zu unterdrücken, werden üblicherweise zwei oder drei Saugkreise 17 an jedem Pol des Gleichstromkreises 3 installiert. Auch wurden bereits aktive Filter an dieser Stelle vorgeschlagen.

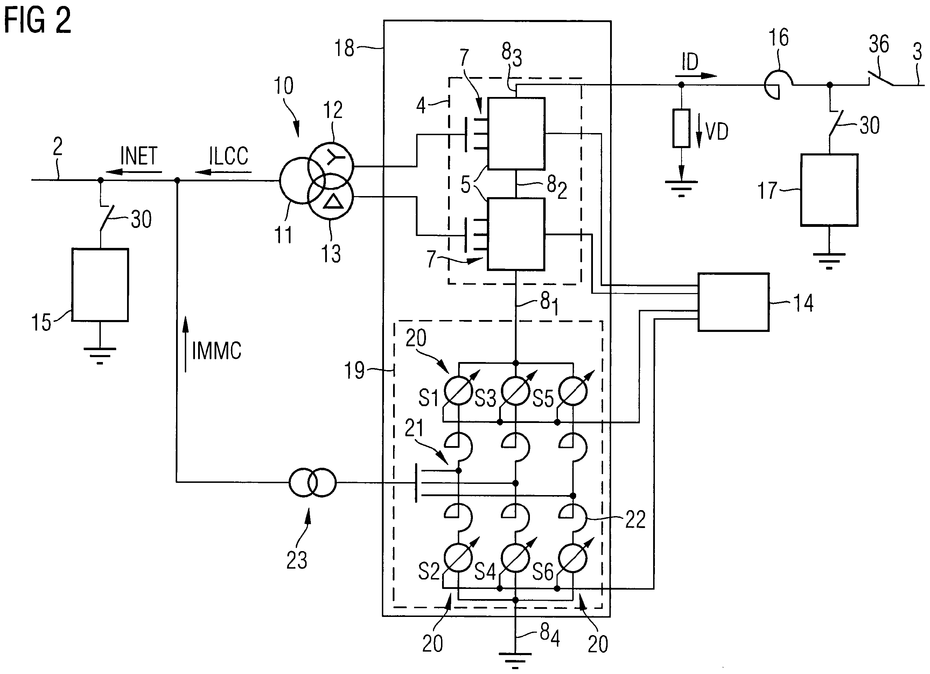

Figur 2 zeigt ein Ausführungsbeispiel des erfindungsgemäßen Hybridumrichters 18, der aus einem netzgeführten Umrichter 4 gemäß Figur 1 sowie einen selbstgeführten Umrichter 19 besteht. Der netzgeführte Umrichter 4 und der selbstgeführte Umrichter 19 sind in Reihe zueinander angeordnet. Mit anderen Worten verbinden der netzgeführte Umrichter 4 und der selbstgeführte Umrichter 19 zwei Pole eines Gleichstrom- oder Gleichspannungskreises 3 oder aber einen Pol des Gleichstrom- oder Gleichspannungskreises 3 mit einem Erdpotenzial, das gegebenenfalls auch als Rückleiter oder als zweiter Pol des Gleichstromkreises 3 dienen kann.

Der selbstgeführte Umrichter 19 umfasst Phasenmodulzweige 20, die sich jeweils zwischen einer Phasen des Wechselspannungsanschlusses 21 des selbstgeführten Umrichters 19 sowie jeweils einer Gleichspannungsklemme $8_1$ beziehungsweise $8_4$ er-strecken. Die Phasenmodulzweige 20 sind wieder zu einer Sechs-Puls-Brücke miteinander verschaltet. Jeder Phasenmodulzweig 20 weist eine steuerbare Spannungsquelle S1 beziehungsweise S6 auf, der jeweils eine Drossel 22 in Reihe geschaltet ist. Die Drossel 22 ermöglicht Kreisströme zu begrenzen, so dass diese innerhalb des selbstgeführten Umrichters 19 regelbar sind. Natürlich spielt die tatsächliche Position der Drossel 22 in der Reihenschaltung innerhalb der jeweiligen Phasenmodulzweigen 20 in diesem Zusammenhang keine Rolle. Die steuerbaren Spannungsquellen S1...S6 der Phasenmodulzweige 20 weisen ein- und abschaltbare Leistungshalbleiterschalter auf, wobei auf deren Topologie später noch genauer eingegangen werden wird. Die ansteuerbare Leistungshalbleiterschalter sind an ihren Steueranschlüssen mit der Schutz- und Regeleinrichtung 14 verbunden.

Der Wechselspannungsanschluss 21 des selbstgeführten Umrichters 19 ist über einen zweiten Transformator 23 als zweite Anschlusseinheit wieder mit dem Wechselspannungsnetz 2 verbunden.

Bei dem erfindungsgemäßen Hybridumrichter 18 wird zumindest ein Teil der Leistung, die zwischen dem Wechselspannungsnetz 2 und dem Gleichspannungs- oder Gleichstromkreis 3 übertragen wird, zumindest teilweise auch über den selbstgeführten Umrichter 19 geführt. Dieser ist somit in der Lage, eine geregelte Gleichspannung in das Gleichspannungssystem 3 einzubringen.

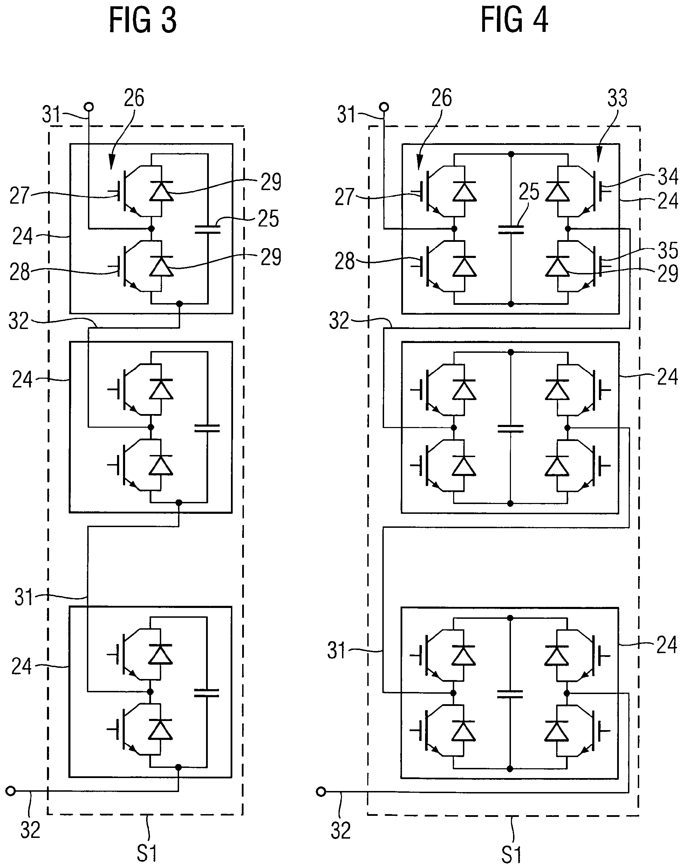

Figur 3 zeigt ein erstes Ausführungsbeispiel einer steuerbaren Spannungsquelle S1 eines Phasenmodulzweiges 20 des Hybridumrichters 18 gemäß Figur 2. Es ist erkennbar, dass die steuerbare Spannungsquelle S1 des selbstgeführten Umrichters 19 aus einer Anzahl in Reihe geschalteter Submodule 24 besteht, wobei jedes Submodul 24 einen Energiespeicher 25 sowie eine Reihenschaltung 26 aus zwei in Reihe geschalteten ein- und abschaltbaren Leistungshalbleiterschaltern 27 und 28 aufweist. Dabei ist jedem ein- und abschaltbaren Leistungshalbleiterschalter 27, 28 eine Freilaufdiode 29 gegensinnig parallel geschaltet. Eine erste Anschlussklemme 31 eines jeden Submoduls 24 ist mit dem Potenzialpunkt zwischen den ein- und abschaltbaren Leistungshalbleiterschaltern 27, 28 verbunden, wohingegen die zweite Anschlussklemme 32 mit einer Klemme des Energiespeichers 25 verbunden ist, der in diesem Fall ein unipolarer Speicherkondensator 25 ist. Die ein- und abschaltbaren Leistungshalbleiterschalter 27, 28 weisen einen schematisch angedeuteten Steueranschluss auf, der über in Figur 3 nicht gezeigte Steuerleitungen mit der Schutz- und Regeleinrichtung 14 verbunden ist. Diese ist somit über zweckmäßige Steuersignale in der Lage, die Leistungshalbleiterschalter 27 und 28 von einer Sperrstellung, in welcher ein Stromfluss über die Leistungshalbleiterschalter in jeder Richtung unterbrochen ist, in eine Durchgangsstellung und umgekehrt zu überführen, in welcher ein Stromfluss über den jeweiligen Leistungshalbleiterschalter in seiner durch den Pfeil angeordneten Durchlassrichtung ermöglicht ist. Je nach Ansteuerung der Leistungshalbleiterschalter 27 und 28 ist es somit möglich, entweder dass die an dem Speicherkondensator 25 abfallende Kondensatorspannung Uc oder aber eine Spannung von null, also eine Nullspannung, zwischen den Anschlussklemmen 31 und 32 eines jeden Submoduls 24 zu erzeugen. Somit kann die an dem gesamten steuerbaren Spannungsquelle S1 abfallende Spannung stufenweise eingestellt werden, wobei die Höhe der Stufen der Kondensatorspannung Uc entspricht. Bei Hochspannungsanwendungen im Bereich von mehreren hundert Kilovolt kann ein Phasenmodulzweig 20 bis zu mehreren hundert solcher Submodule 24 aufweisen.

Figur 4 zeigt eine abweichende Ausgestaltung der steuerbaren Spannungsquellen S1...S6 der Phasenmodulzweige 20 des selbstgeführten Umrichters 19 gemäß Figur 2 am Beispiel der steuerbaren Spannungsquelle S1. Wie im Falle eines Umrichters 19 gemäß Figur 3 sind alle steuerbaren Spannungsquellen S1...S6 identisch aufgebaut. Es ist erkennbar, dass auch die steuerbare Spannungsquelle S1 gemäß Figur 4 aus einer Reihenschaltung von identischen Submodulen 24 besteht, wobei jedes Submodul 24 eine erste Anschlussklemme 31 sowie eine zweite Anschlussklemme 32 aufweist. Auch verfügt jedes Submodul 24 über einen unipolaren Speicherkondensator 25 als Energiespeicher. Dem Energiespeicher 25 ist wieder eine erste Reihenschaltung 26 aus ein- und abschaltbaren Leistungshalbleiterschaltern 27 und 28 parallel geschaltet. Darüber hinaus ist eine zweite Reihenschaltung 33 vorgesehen, die dem unipolaren Speicherkondensator 25 ebenfalls parallel geschaltet ist. Die zweite Reihenschaltung 33 weist wieder einen ersten 34 sowie einen zweiten 35 ein- und abschaltbaren Leistungshalbleiterschalter auf, denen jeweils wieder eine Freilaufdiode 29 gegensinnig parallel geschaltet ist. Die erste Anschlussklemme 31 ist mit dem Potenzialpunkt zwischen den Leistungshalbleiterschaltern 27 und 28 der ersten Reihenschaltung 26, wohingegen die zweite Anschlussklemme 32 mit dem Potenzialpunkt zwischen den Leistungshalbleiterschaltern 34 und 35 der zweiten Reihenschaltung 33 verbunden ist. Somit kann gemäß Figur 4 an den Anschlussklemmen 31 und 32 eines jeden Submoduls 24 entweder die an dem Speicherkondensator 25 abfallende Kondensatorspannung Uc, eine Nullspannung oder aber die inverse Kondensatorspannung -Uc erzeugt werden.

Außer den in den Figuren 3 und 4 dargestellten Leistungshalbleiterschaltern und dem Energiespeicher umfasst jedes Submodul 24 darüber hinaus auch noch weitere Mittel, wie Steuerelektronik, Messsensoren und Kühlvorrichtungen oder dergleichen, die hier aus Gründen der Übersichtlichkeit nicht gezeigt sind.

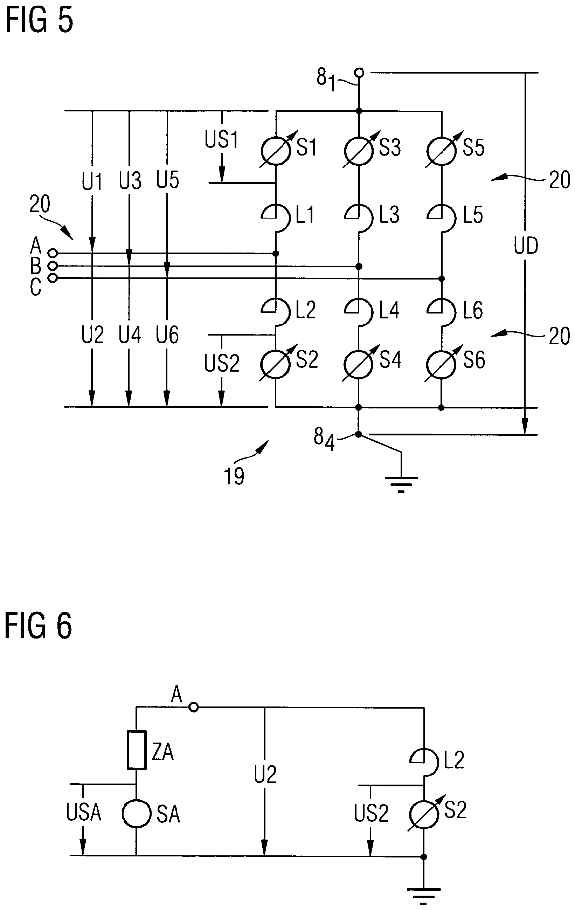

Der Betrieb des selbstgeführten Umrichters 19 gemäß Figur 2 wird nun mit Hilfe von Figur 5 im Folgenden erläutert. Die Spannung zwischen den Gleichspannungsklemmen $8_1$ und $8_4$ wird hierbei als UD und die Spannungen zwischen den Klemmen A, B und C des Wechselspannungsanschlusses 21 und den Gleichspannungsanschlussklemmen $8_1$ und $8_4$ als U1, U2, U3, U4, U5 und U6 bezeichnet. Wird die Gleichspannungsklemme $8_4$ mit dem Erdpotenzial verbunden und handelt es sich bei dem in Figur 2 dargestellten Wechselspannungsnetz 2 um ein dreiphasiges Wechselspannungsnetz, dann werden die steuerbaren Spannungsquellen S1...S6 so gesteuert, dass die Spannungen U1...U6 die folgenden Gleichungen erfüllen:

$$U2 = Vac \cdot \sqrt{2} \cdot \sin(w \cdot t) \quad , \quad U4 = Vac \cdot \sqrt{2} \cdot \sin(w \cdot t - a) \quad \text{und}$$
$$U6 = Vac \cdot \sqrt{2} \cdot \sin(w \cdot t - 2 \cdot a), \quad\quad\quad\quad\quad (1),$$

wobei $w = 2 \cdot \pi f$, $a = 2/3 \cdot \pi$, Vac der Leiter-Erde-Effektivwert der dreiphasigen Spannung, *f* die Frequenz in Herz und *t* die Zeit in Sekunden sind, und die Winkeleinheit der Radiant (rad) ist.

Die Spannungen U1, U2 ... U6 der Phasenmodulzweige 20 unterscheiden sich von den Spannungen der steuerbaren Spannungsquellen S1...S6, also der Reihenschaltung der Submodule 24, aufgrund der Drosseln L1, L2...L6. Diese Abweichung wird selbstverständlich von der Regelungseinrichtung 14 berücksichtigt. Wird ein Wert für die Spannung UD zwischen den Gleichspannungsklemmen $8_1$ und $8_4$ vorgegeben, dann müssen die Phasenmodulzweige 20 beziehungsweise S1, S2 und S3 so gesteuert werden, dass die Spannungen U1, U3 und U5 folgende Beziehung erfüllen:

$$U1 = UD-U2, \quad U3 = UD-U4 \quad \text{und} \quad U5 = UD-U6. \quad (2)$$

Sind die Phasenmodulzweige 20 aufgebaut, wie dies in Figur 3 dargestellt ist, können diese nur eine positive oder aber nur eine negative Spannung und eine Nullspannung liefern. Daher ergibt sich die folgende Einschränkung:

$$Vac \cdot \sqrt{2} \leq UD. \quad\quad\quad\quad\quad (3)$$

Die an den Gleichspannungsklemmen $8_1$ und $8_4$ abfallende Spannung UD muss nicht unbedingt konstant sein. Vielmehr kann eine überlagerte Wechselspannungskomponente oder eine Summe von Wechselspannungen mit unterschiedlichen harmonischen Frequenzen der Grundschwingung für eine Variation der Spannung UD sorgen. Ein Polaritätswechsel von UD erfordert jedoch den Einsatz von Submodulen 24 gemäß Figur 4.

Es ist für den Fachmann ersichtlich, dass die bislang angestellten Betrachtungen auch gelten, wenn die Spannungen an dem Wechselspannungsanschluss 21 aus einer Summe von Spannungskomponenten mit unterschiedlichen Frequenzen bestehen, wobei eine dieser Komponenten mit der Grundfrequenz des Wechselspannungsnetzes 3 variiert. Der Wechselspannungsausgang am Wechselspannungsanschluss 21 kann darüber hinaus auch eine Nullfrequenz aufweisen, also eine Gleichspannungskomponente. Darüber hinaus gelten die Gleichungen auch, falls der Parameter a mit einem negativen Vorzeichen versehen wird oder zu null wird. Damit wird klar, dass der selbstgeführte Umrichter 19 auch mit einem unsymmetrischen dreiphasigen Wechselspannungsnetz verbunden werden kann. Weist die Wechselspannung des Wechselspannungsnetzes 2 harmonische Komponenten, Gegensystemkomponenten oder Nullsystemkomponenten auf, können die Gleichungen auch wie folgt dargestellt werden:

$$\hat{VA} \leq UD \wedge \hat{VB} \leq UD \wedge \hat{VC} \leq UD \qquad (4)$$

wobei $\hat{VA}$, $\hat{VB}$ und $\hat{VC}$ die maximalen Betragswert der Leiter-Erde-Spannung an die jeweiligen Klemmen beziehungsweise Phasen A, B und C des Wechselspannungsanschlusses 21 sind.

Bei einer bevorzugten Ausgestaltung der Erfindung sorgt die Schutz- und Regeleinrichtung 14 gemäß Figur 2 dafür, dass der netzgeführte Umrichter 4 mit einem optimalen Zündwinkel, also in einem zuvor festgelegten optimalen Betriebsbereich, arbeitet, wobei dies unabhängig von der Spannung im Wechselspannungsnetz 2 sowie von der Gleichspannung im Gleichspannungskreis 3 erfolgt. Die Optimierung erfolgt durch entsprechende Ansteuerung des selbstgeführten Umrichters 19 erreicht. Mit anderen Worten wird im Rahmen der Erfindung der optimale Betrieb des netzgeführten Umrichters 4 nicht durch einen Laststufenschalter am Transformator 10, sondern durch entsprechende Ansteuerung des selbstgeführten Umrichters 19 ermöglicht. Aufgrund der modularen Ausgestaltung der Phasenmodulzweige 20 ist eine hoch dynamische Regelung möglich, so dass auch Welligkeiten der Gleichspannung im Gleichstromkreis 3 unterdrückt werden können. Der Aufwand und somit die Kosten der Glättungsdrossel 16 im Gleichspannungskreis 3 kann somit reduziert werden. Dies gilt auch für die Saugkreise 17 des Gleichspannungskreises 3.

Zur Bestimmung der Gleichspannung, die der selbstgeführte Umrichter 19 zu dem oben genannten Zweck erzeugen soll, kann die Schutz- und Regelungseinrichtung 14 die am netzgeführten Umrichter 4 abfallende Gleichspannung beispielsweise aus der gemessenen Wechselspannung, aus dem Zündwinkel der Stromventile 6 des netzgeführten Umrichters 4 und aus dem Gleichstrom des Gleichstromkreises 3 nach den bekannten Berechnungsformeln ermitteln. Der Sollwert der an den Gleichspannungsklemmen $8_1$ und $8_4$ abfallenden Gleichspannung ergibt sich dann aus der Differenz von dem ermittelten Wert zum Sollwert für VD, also der Gleichspannung im Gleichspannungskreis 3.

Figur 6 zeigt beispielhaft einen Stromkreis, der sich bei dem selbstgeführten Umrichter 19 gemäß Figur 5 ausbilden kann. Der Strompfad des Kreisstromes gemäß Figur 6 umfasst die in Figur 5 mit S2 bezeichnete steuerbare Spannungsquelle, die Drossel L2, den zugehörigen Wechselspannungsanschluss 21 und das schematisch durch eine Spannungsquelle SA und eine Impedanz ZA dargestellte Wechselspannungsnetz 2. Die Spannung U2 wurde bereits weiter mit Hilfe der Gleichung (1) definiert. Für eine vereinfachte Darstellung des Leistungsaustauschs zwischen dem Wechselspannungsnetz 2 und dem Phasenmodulzweig 20 gemäß Figur 6 wird die Spannung US2 wie folgt definiert:

$$US2 = VS2 \cdot \sqrt{2} \cdot \sin(w \cdot t + \phi S2), \qquad (5)$$

wobei $VS2$ der Effektivwert und $\phi S2$ der Phasenwinkel von US2 sind.

Die mit dem Wechselspannungsnetz 3 ausgetauschte Leistung S2A lässt sich in der komplexen Schreibweise darstellen als:

$$S2A = P2A + j \cdot Q2A = US2 \cdot \overline{\left( \frac{US2 - Vac}{j \cdot \omega \cdot L2 + \sigma L2} \right)} \qquad (6)$$

wobei $P2A$ die Wirkleistung, $Q2A$ die Blindleistung und $\sigma L2$ der Ersatzwert für den Verlustwiderstand des Stromkreises gemäß Figur 6 sind. Die Linie über dem 2. Term auf der rechten Seite der Gleichung 6 bedeutet, dass diese komplexe Größe konjugiert wird. Der Verlustwiderstand wird im Wesentlichen von der Drossel L2, der steuerbaren Spannungsquelle S2 und den elektrischen Verbindungen erzeugt. Da $\sigma L2$ bekanntermaßen sehr klein gegenüber $\omega L2$ ist, hat er keinen Einfluss auf die hier erläuterten Verfahren und wird er im Folgenden nicht weiter berücksichtigt. Mit anderen Worten gilt in guter Näherung:

$$\sigma L2 \cong 0 \qquad (6a)$$

Wird $US2$ wie in Gleichung (5) definiert, kann die von S2 an das Wechselspannungsnetz 2 abgegebene Wirkleistung P2A wie folgt berechnet werden:

$$P2A = \frac{US2 \cdot Vac}{\omega \cdot L2} \cdot \sin(\phi S2) \qquad (7)$$

Entsprechend gilt für die Blindleistung QA:

$$Q2A = \frac{US2^2 - US2 \cdot Vac \cdot \cos(\phi S2)}{\omega \cdot L2} \qquad (8)$$

Ähnliche Gleichungen lassen sich für alle sechs Spannungsquellen des selbstgeführten Umrichters 19 ableiten. Damit ist es ersichtlich, dass die Wirkleistung und die Blindleistung, die der Umrichter 19 mit dem Wechselspannungsnetz 2 austauscht, durch den Betrag und den Phasenwinkel der Umrichterspannungen geregelt werden kann. Die Anwendung dieses Prinzips führt zu einer erweiterten Ausführung der Erfindung, indem die Schutz- und Regeleinrichtung 14 die Spannungen des Umrichters 19 so einstellt, dass dieser zumindest teilweise die Blindleistung liefert, die durch den netzgeführten Umrichter 4 verbraucht wird. Auf diese weise wird der Hybridumrichter 18 entlastet und den Bedarf an Saugkreisen 5 auf der Wechselstromseite wird entsprechend reduziert.

Die Regelung der Wirkleistung, die der Umrichter 19 mit dem Wechselspannungsnetz 2 austauscht basiert vorzugsweise auf dem Prinzip, dass in der oben ausgeführten Gleichung mathematisch dargestellt wird. Sie bezweckt die Führung der Spannung auf den Energiespeichern 25 des Umrichters 19 durch die gezielte Auf- und Entladung der Kondensatoren 25 der Submodule 24 und erreicht auch damit den Ausgleich der Leistung, die vom Umrichter 19 mit dem Gleichspannungskreis 3 ausgetauscht wird.

Selbstverständlich kann der Stromkreis gemäß Figur 6 ergänzt werden, z.B. falls die Spannung für die Schutz- und Regelungseinheit 14 nicht direkt an den Umrichterklemmen A, B und C sondern auf der Primarseite des zweiten Transformators 23 gemessen wird, wobei der Wert für $L2$ und $\sigma L2$ entsprechend angepasst werden.

Wie bereits erwähnt wurde, können die Spannungen und Ströme Komponenten mit Frequenzen aufweisen, die ganzzahlige Vielfache der Grundschwingung sind. Diese Spannungs- und Stromkomponenten werden hier als harmonische Oberschwingungen bezeichnet. Die Schutz- und Regelungseinrichtung 14 steuert den selbstgeführten Umrichter 19 so an, dass dieser sowohl auf der Gleich- als auch auf der Wechselspannungsseite des Hybridumrichters 18 eine Spannung erzeugt, mit der die harmonischen Oberschwingungen zumindest teilweise unterdrückt werden. Damit kann die Anzahl und/oder die Leistungsfähigkeit der Saugkreise 15, 17 herabgesetzt werden.

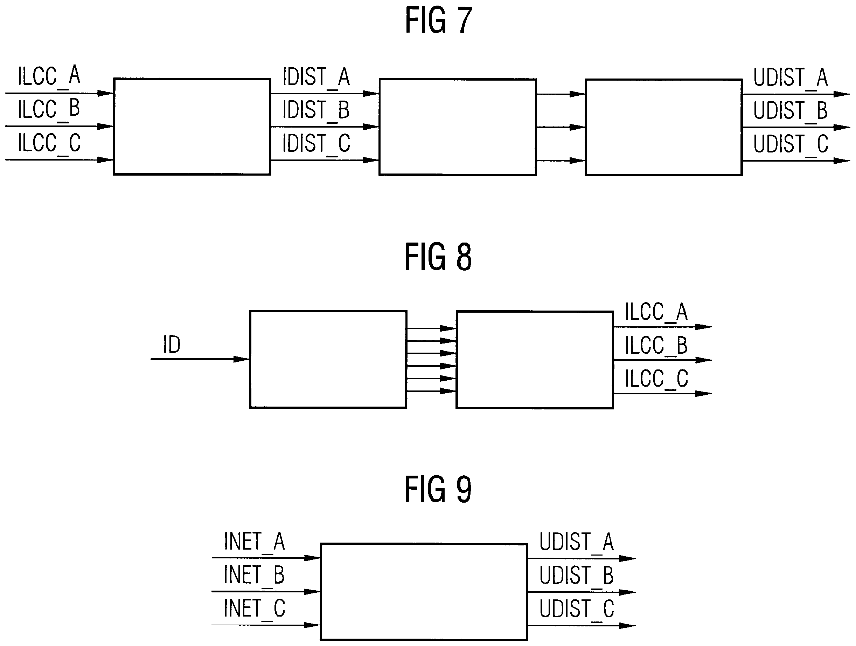

Eine vereinfachte Darstellung einer möglichen Regelungsfunktion zu diesem Zweck wird in Figur 7 schematisch verdeutlicht. Eine weitere Regelungsfunktion zum gleichen Zweck zeigt vereinfacht Figur 9.

Die in Figur 7 dargestellten Eingangssignale sind die Ströme, die durch den netzgeführten Umrichter 4 gemäß Figur 2 ins Wechselspannungsnetz 2 eingespeist werden. Diese Ströme sind mit ILCC_A, ILCC_B und ILCC_C für die Phasen A, B und C des Wechselspannungsnetzes 2 bezeichnet. Durch das rechnerische Heraustrennen der Grundschwingungskomponente für jede Phase erhält man am Ausgang des ersten Regelungsblocks die Signale IDIST_A. IDIST_B und IDIST_C, die den zu kompensierenden Störströmen entsprechen. Der zweite Regelungsblock berechnet mit Hilfe von Übertragungsfunktionen die Signale an den Sekundärwickelungen des zweiten Transformators 23 und ermittelt die Stromkomponenten, die der selbstgeführte Umrichter 19 auf die jeweiligen Phasen zur Kompensation addieren soll. Der dritte Regelungsblock ermittelt die sich daraus ergebenden Spannungskomponenten UDIST_A, UDIST_B und UDIST_C, die der Umrichter 19 erzeugen muss, um die Stromkomponenten am Eingang des Regelungsblocks hervorzurufen. Diese Übertragungsfunktion kann beispielsweise durch Differentialgleichungen oder durch einen Stromregler bereitgestellt werden.

Die Eingangssignale ILCC_A, ILCC_B und ILCC_C können, wie in Figur 2 gezeigt, an einer zweckmäßigen Stelle gemessen werden. Alternativ können sie aus dem Gleichstrom ID des Gleichstromkreises 3 auf bekannte Weise berechnet werden. Diese Vorgehensweise ist in Figur 8 vereinfacht dargestellt. Der erste Regelungsblock stellt quasi ein Modell des netzgeführten Umrichters 4, beispielsweise in Gestalt einer Schaltfunktion dar, die dem Zustand der Thyristoren entspricht. Diese Methode kann vorteilhaft sein, wenn dieser Zustand durch die Schutz- und Regeleinrichtung 14 bestimmt wird und diese Information dort bereits vorliegt.

Die oben erläuterte Wirkungsweise kann durch einen geschlossenen Regelkreis und Aktivfilter-Regelungsverfahren geändert oder ergänzt werden. In diesen Fall wird vorzugsweise den Summenstrom, der von den Umrichtern 4, 19 ins Wechselspannungsnetz 2 fließt, INET, gemessen und als Eingangsgröße verwendet. Diese Vorgehensweise ist in Figur 9 vereinfacht dargestellt.

Bevor der erfindungsgemäße Hybridumrichter 18 gestartet, also dem Wechselspannungsnetz 2 zugeschaltet wird, sind alle Leistungshalbleiterschalter in ihrer Sperrstellung. Zunächst müssen die Speicherkondensatoren 25 der Submodule 24 geladen werden, so dass sie ihre Betriebsbereitschaft erreichen und der selbstgeführte Umrichter 19 in der Lage ist, seine Bemessungsspannung zwischen den Gleichspannungsklemmen $8_1$ und $8_2$ zu halten.

Dieser Ladungsvorgang erfolgt gemäß dem Stand der Technik über Startwiderstände. Bei dem in Figur 2 gezeigten Ausführungsbeispiel der Erfindung sind solche Widerstände überflüssig. Das Laden der Speicherkondensatoren kann durch zweckmäßige Ansteuerung Leistungshalbleiterschalter erfolgen. Es kann wirtschaftlich vorteilhaft sein, wenn die einzelnen Bemessungsspannungen der Umrichter 4 und 19 kleiner sind als die Bemessungsspannung VD des Gleichstromkreises 3. Die Bemessungsspannung VD wird dann nur erreicht, wenn beide Umrichter 4 und 19 in Betrieb sind. Der Gleichspannungsschalter 36 in Figur 2 kann notwendig sein, um den Hybridumrichter 18 vom Gleichstromkreis 3 im Fehlerfall abzutrennen.

Im Rahmen der Erfindung ist auch ein Start des Hybridumrichters 1 mit Spannung aus dem Gleichstromkreis 3, d.h. ein so genannter Black Start ohne Spannung aus dem Wechselspannungsnetz 2, möglich. Voraussetzung dafür ist, dass der Gleichstromkreis 3 von einem Dritten nicht gezeigten Umrichter gespeist wird. Bei einem selbstgeführten Umrichter 19 mit Modulen gemäß Figur 3 oder 4 wird der netzgeführte Umrichter 4 für diesen Start zuerst in einen so genannten Bypasszustand gesteuert, wobei sich alle Leistungshalbleiterschalter des selbstgeführten Umrichters 19 in ihrer Sperrstellung befinden. Der Bypasszustand wird dann erreicht, indem alle Thyristoren 9 einer Phase an jeder Brücke 5 in ihren Leitzustand gesteuert werden, wobei die anderen Thyristoren in Sperrzustand gehalten werden. Die vom netzgeführten Umrichter 4 erzeugte Gleichspannung ist dann Null. Der Start erfolgt zuerst durch die Aufladung der Speicherkondensatoren 25 durch die Zuschaltung des Gleichspannungsschalters 36 oder durch die Erhöhung der Gleichspannung durch den einspeisenden Umrichter nachdem der Gleichspannungsschalter zugeschaltet ist. Nach der Aufladung erreicht der selbstgeführte Umrichter 19 die Betriebsbereitschaft und kann Wirk- und Blindleistung ins Wechselspannungsnetz 2 einspeisen, womit der Start des netzgeführten Umrichters 15 nun möglich ist.

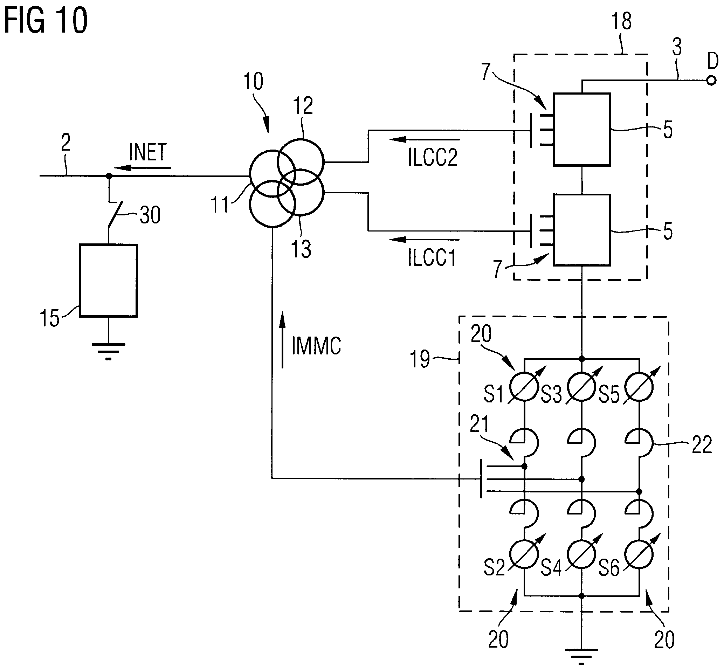

Figur 10 zeigt ein weiteres Ausführungsbeispiel der Erfindung. Hier sind beide Umrichter 4, 19 durch einen einzigen gemeinsamen Transformator 37 mit dem Wechselspannungsnetz 2 verbunden. Der gemeinsame Transformator 37 weist drei Sekundärwicklungen auf. Der netzgeführte Umrichter 4 ist mittels jeweils einer Graetzbrücke 5 mit zwei Sekundärwicklungen verbunden. Der selbstgeführte Umrichter ist an die dritte Sekundärwicklung angeschlossen.

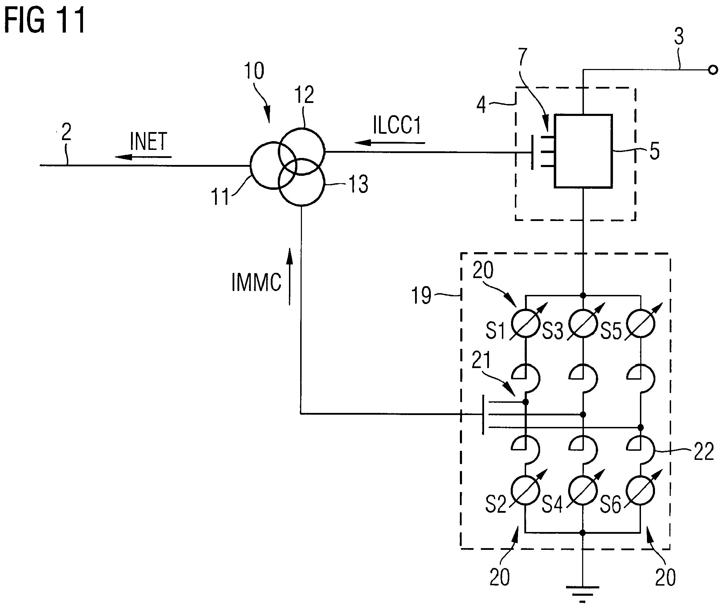

Figur 11 zeigt ein weiteres Ausführungsbeispiel der Erfindung. Hier sind wieder beide Umrichter 4, 19 über den gleichen gemeinsamen Transformator 37 mit dem Wechselspannungsnetz 2 verbunden. Der netzgeführte Umrichter 4 weist jedoch nur eine 6-pulsige Graetzbrücke 5 auf. Somit ist zu dessen Anschluss ans Wechselspannungsnetz 2 nur eine Sekundärwicklung notwendig.

Wie allgemein bekannt und in Figur 1 auch zu erkennen ist, kann ein netzgeführter Umrichter 4 mit Thyristoren den Strom nur in einer Richtung leiten. Damit ist eine Umkehrung der Leistung nur durch eine Umkehrung der Polarität der Spannung im Gleichstromkreis 3 möglich. Gemäß der Erfindung wird der netzgeführte Umrichter 4 jedoch mit Leistungshalbleiterschaltern ausgerüstet, die Strom in beiden Richtungen leiten bzw. steuern können (z.B. die so genannten Triacs). Auch eine gegebensinnige Parallelschaltung von Thyristoren, so dass der Stromfluss in beiden Richtungen gesteuert werden kann, ist im Rahmen der Erfindung möglich. Der selbstgeführte Umrichter 19 weist Phasemodulzweige gemäß Figur 3 oder Figur 4 auf, so dass dieser den Strom in beiden Richtungen führen kann.

Alternativ zur in den Ansprüchen definierten Erfindung kann der netzgeführte Umrichter 1 mittels Schalter umgepolt werden. Auf diese Weise kann der Hybridumrichter 18 die Richtung der Wirkleistung, die über den Umrichter 18 geführt wird, umkehren, indem die Richtung des Stromes im Gleichstromkreis 3 invertiert wird, d.h. ohne dass die Polarität der Spannung am Gleichstromkreis 3 gewechselt werden muss.

Bei einer abweichenden Ausführung der Erfindung werden ein - und abschaltbare Leistungshalbleiterschalter, vorzüglich IGBT anstelle der Thyristoren im Umrichter 4 eingesetzt, wobei diese Leistungshalbleiterschalter nicht mit Hochfrequenz sondern etwa wie die Thyristoren nur einmal in der Periode der Wechselspannung zu- und abgeschaltet werden. Ein solcher Umrichter wird hier als netzgetakteter Umrichter 4 bezeichnet. Dieser Begriff umfasst selbstverständlich auch netzgeführte Umrichter mit ein-, jedoch nicht abschaltbaren, Leistungshalbleiterschaltern. Der Vorteil hierbei ist, dass ein solcher Hybridumrichter 18 in der Lage ist, die genaue Zeit der Zuschaltung und der Sperrung, d.h. die Kommutierung des Umrichterstromes aktiv zu steuern, so dass ein Betrieb mit einem Zündwinkel Alpha bzw. einem Löschwinkel Gamma nahe Null ermöglich ist. Hierdurch wird die vom netzgetakteten Umrichter 4 verbrauchte Blindleistung stark minimiert. Darüber hinaus ist ein solcher Umrichter gegen über den bekannten Kommutierungsfehler geschützt. Aus dem gleichen Grund ist keine Wechselspannung vom Wechselspannungsnetz 2 zum Start des Umrichters mehr notwendig. Ein solcher Hybridumrichter 18 ist in der Lage, den Strom im Fehlerfall schnell zu sperren.

**Patentansprüche**

**1.** Hybridumrichter (18) zum Übertragen einer elektrischen Leistung zwischen einem Wechselspannung führenden Wechselspannungsnetz (2) und einem Gleichspannungsnetz (3) mit

- einem netzgetakteten Umichter (4), dessen Leistungshalbleiterschalter (9) zum einmaligen Schalten in einer Periode der Wechselspannung eingerichtet sind und der mit einer Anschlusseinheit (10) zum Anschluss des Wechselspannungsnetzes (2) verbunden ist, und

- einem ebenfalls mit der besagten Wechselspannungsnetz (2) verbindbaren selbstgeführten Umrichter (19), der Phasenmodulzweige (20) mit sowohl ein- als auch abschaltbaren Leistungshalbleiterschaltern (27,28,34,35) aufweist und der mit dem netzgetakteten Umrichter(4) in Reihe geschaltet ist,

**dadurch gekennzeichnet, dass**

die Phasenmodulzweige (20) über eine Reihenschaltung von Submodulen (24) verfügen, wobei jedes Submodul (24) zwei Anschlussklemmen (31,32), einen Energiespeicher (25) und eine Leistungshalbleiterschaltung aus ein- und abschaltbaren Leistungshalbleiterschaltern (27,28,34,35) aufweist, die so ansteuerbar sind, dass die an dem Energiespeicher (25) abfallende Spannung oder eine Nullspannung an den beiden Anschlussklemmen (31,32) des jeweiligen Submoduls (25) abfällt und der netzgetaktete Umrichter (4) Stromrichterventile (6) aufweist, über die ein Stromfluss in beiden Richtungen ermöglicht ist, und über die der Stromfluss in beiden Richtungen gesteuert werden kann.

2. Hybridumrichter (18) nach Anspruch 1,
**dadurch gekennzeichnet, dass**
der netzgetaktete Umrichter ein netzgeführter Umrichter (4) ist, der Stromrichterventile (6) aus einschaltbaren, jedoch nicht abschaltbaren Leistungshalbleiterschaltern (9) aufweist.

3. Hybridumrichter (18) nach Anspruch 2,
**dadurch gekennzeichnet, dass**
die Stromrichterventile 6) des netzgeführten Umrichters (4) zu wenigstens einer Sechs-Puls-Brücke (5) miteinander verschaltet sind, wobei jede Sechs-Puls-Brücke (5) einen Wechselspannungsanschluss (7) aufweist, der mit der Anschlusseinheit (10) verbunden ist.

4. Hybridumrichter (18) nach Anspruch 3,
**dadurch gekennzeichnet, dass**
die Stromrichterventile 6) des netzgeführten Umrichters (4) zwei in Reihe zueinander angeordnete Sechs-Puls-Brücken (5) ausbilden, wobei jede Sechs-Puls-Brücke (5) mit einem Wechselspannungsanschluss (7) ausgerüstet ist, der mit der Anschlusseinheit (10) verbunden ist.

5. Hybridumrichter (18) nach Anspruch 4,
**dadurch gekennzeichnet, dass**
die Anschlusseinheit ein erster Transformator (10) mit einer Primärwicklung (11) und zwei Sekundärwicklungen (12,13) ist, wobei jede Sekundärwicklung (12,13) mit einem Wechselspannungsanschluss (7) der jeweiligen Sechs-Puls-Brücke (5) verbunden ist.

6. Hybridumrichter (18) nach einem der vorhergehenden Ansprüche,
**dadurch gekennzeichnet, dass**
die Phasenmodulzweige (20) des selbstgeführten Umrichters (4) zu einer Sechs-Puls-Brücke (5) miteinander verschaltet sind, wobei sich jeder Phasenmodulzweig (20) zwischen einem Wechselspannungsanschluss (21) und einer Gleichspannungsklemme $(8_1,8_4)$ erstreckt.

7. Hybridumrichter (18) nach einem der vorhergehenden Ansprüche,
**dadurch gekennzeichnet , dass**
der Wechselspannungsanschluss (21) des selbstgeführten Umrichters (19) mit einer Sekundärwicklung eines zweiten Transformators (23) verbunden ist.

8. Hybridumrichter (18) nach einem der Ansprüche 1 bis 5,
**dadurch gekennzeichnet, dass**
der Weehselspannungsanschluss (21) des selbstgeführten Umrichters (19) mit einer Sekundärwicklung eines ersten Transformators (10) verbunden ist, der wenigstens eine weitere Sekundärwicklung (12,13) aufweist, über welche der erste Transformator (10) mit dem netzgetakteten Umrichter (4) verbunden ist.

9. Hybridumrichter (18) nach einem der vorhergehenden Ansprüche,
**dadurch gekennzeichnet, dass**
jedes Submodul (24) eine Reihenschaltung (26) von zwei ein- und abschaltbaren Leistungshalbleiterschaltern (27,28) aufweist, die dem Energiespeicher (25) parallel geschaltet ist, wobei eine erste Anschlussklemme (32) mit einer Klemme des Energiespeichers (25) une eine zweite Anschlussklemme (31) mit dem Potenzialpunkt zwischen den ein- und abschaltbaren Leistungshalbleiterschaltern (27,28) verbunden ist.

10. Hybridumrichter (18) nach einem der Ansprüche 1 bis 8,
**dadurch gekennzeichnet, dass**
jedes Submodul (25) vier Leistungshalbleiterschalter (27,28,34,35) aufweist, die zusammen mit dem Energiespeicher (25) eine Vollbrückenschaltung ausbilden.

11. Hybridumrichter (18) nach einem der vorhergehenden Ansprüche,
**dadurch gekennzeichnet, dass**
jedem ein- und abschaltbaren Leistungshalbleiterschalter (27,28,34,35) eine Freilaufdiode (29) gegensinnig parallel geschaltet ist.

12. Verfahren zum Übertragen elektrischer Leistung zwischen einem Wechselspannung führenden Wechselspannungsnetz (2) und einem Gleichspannungsnetz (3) mittels eines Hybridumrichters, bei dem Leistungshalbleiterschalter (9) eines netzgetakteten Umrichters (4) in einer Periode der Wechselspannung einmal von einer Sperrstellung, in der ein Stromfluss über den Leistungshalbleiterschalter (9) unterbrochen ist, in eine Durchgangsstellung überführt werden, in der ein Stromfluss über den Leistungshalbleiterschalter (9) ermöglicht ist, und bei dem ein in Reihe zum netzgetakteten Umrichter (4) angeordneter selbstgeführter Umrichter (19), der mit dem gleichen Wechselspannungsnetz (2) verbunden ist, Strom- und Spannungskomponenten mit einer Frequenz, die ein ganzzahliges Vielfaches der Grundschwingung der Wechselspannung ist, unterdrückt,
**dadurch gekennzeichnet, dass**
der selbstgeführte Umrichter (19) ein modularer Mehrstufenumrichter ist, der die besagten Spannungskomponenten sowohl im Wechselspannungsnetz als auch im Gleichspannungsnetz (2) unterdrückt und dass elektrischer Strom durch Stromrichterventile (6) des netzgetakteten Umrichters (4) in beide Richtungen fließen kann, und in beiden Richtungen gesteuert werden kann.

13. Verfahren nach Anspruch 12,
**dadurch gekennzeichnet, dass**
der modulare Mehrstufenumrichter (19) zumindest teilweise die vom netzgetakteten Umrichter (4) verbrauchte Blindleistung bereitstellt.

**Claims**

1. Hybrid converter (18) for transmitting an electrical power between an AC voltage system (2) that carries AC voltage and a DC voltage system (3) having

   - a system-clocked converter (4), the power semiconductor switches (9) of said converter being configured for the one-time switching in a period of the AC voltage and said converter being connected to a connection unit (10) for the connection of the AC voltage system (2), and
   - a self-commutated converter (19), which is likewise able to be connected to said AC voltage system (2) and which has phase module branches (20) having power semiconductor switches (27, 28, 34, 35) that can be both switched on and off, and which is connected in series with the system-clocked converter (4),

   **characterized in that**
   the phase module branches (20) have a series circuit of submodules (24), wherein each submodule (24) has two connection terminals (31, 32), an energy store (25) and a power semiconductor circuit composed of power semiconductor switches (27, 28, 34, 35) that can be switched on and off and that can be actuated so that the voltage dropped at the energy store (25) or a zero voltage is dropped at the two connection terminals (31, 32) of the respective submodule (25) and the system-clocked converter (4) has current converter element valves (6), by means of which a flow of current is made possible in both directions, and by means of which the flow of current can be controlled in both directions.

2. Hybrid converter (18) according to Claim 1,
   **characterized in that**
   the system-clocked converter is a system-commutated converter (4), which has current converter element valves (6) composed of power semiconductor switches (9) that can be switched on but cannot be switched off.

**3.** Hybrid converter (18) according to Claim 2,
**characterized in that**
the current converter element valves (6) of the system-commutated converter (4) are interconnected with one another so as to form at least one six-pulse bridge (5), wherein each six-pulse bridge (5) has an AC voltage connection (7), which is connected to the connection unit (10).

**4.** Hybrid converter (18) according to Claim 3,
**characterized in that**
the current converter element valves (6) of the system-commutated converter (4) form two six-pulse bridges (5) arranged in series with one another, wherein each six-pulse bridge (5) is provided with an AC voltage connection (7), which is connected to the connection unit (10).

**5.** Hybrid converter (18) according to Claim 4,
**characterized in that**
the connection unit is a first transformer (10) having a primary winding (11) and two secondary windings (12, 13), wherein each secondary winding (12, 13) is connected to an AC voltage connection (7) of the respective six-pulse bridge (5).

**6.** Hybrid converter (18) according to one of the preceding claims,
**characterized in that**
the phase module branches (20) of the self-commutated converter (4) are interconnected with one another so as to form a six-pulse bridge (5), wherein each phase module branch (20) extends between an AC voltage connection (21) and a DC voltage terminal ($8_1$, $8_4$).

**7.** Hybrid converter (18) according to one of the preceding claims,
**characterized in that**
the AC voltage connection (21) of the self-commutated converter (19) is connected to a secondary winding of a second transformer (23).

**8.** Hybrid converter (18) according to one of Claims 1 to 5,
**characterized in that**
the AC voltage connection (21) of the self-commutated converter (19) is connected to a secondary winding of a first transformer (10), which has at least one further secondary winding (12, 13), by means of which the first transformer (10) is connected to the system-clocked converter (4).

**9.** Hybrid converter (18) according to one of the preceding claims,
**characterized in that**
each submodule (24) has a series circuit (26) of two power semiconductor switches (27, 28) that can be switched on and off, said series circuit being connected in parallel with the energy store (25), wherein a first connection terminal (32) is connected to a terminal of the energy store (25) and a second connection terminal (31) is connected to the potential point between the power semiconductor switches (27, 28) that can be switched on and off.

**10.** Hybrid converter (18) according to one of Claims 1 to 8,
**characterized in that**
each submodule (25) has four power semiconductor switches (27, 28, 34, 35), which, together with the energy store (25), form a full-bridge circuit.

**11.** Hybrid converter (18) according to one of the preceding claims,
**characterized in that**
a freewheeling diode (29) is connected in parallel, in opposition, with each power semiconductor switch (27, 28, 34, 35) that can be switched on and off.

**12.** Method for transmitting electrical power between an AC voltage system (2) that carries AC voltage and a DC voltage system (3) by means of a hybrid converter, in which power semiconductor switches (9) of a system-clocked converter (4) are transferred once in a period of the AC voltage from an off position, in which a flow of current is interrupted by means of the power semiconductor switches (9), to an on position, in which a flow of current is made possible by means of the power semiconductor switches (9), and in which a self-commutated converter (19), which is connected to the same AC voltage system (2), arranged in series with the system-clocked converter (4), suppresses current components and voltage components at a frequency that is an integer multiple of the fundamental frequency of the AC voltage,

**characterized in that**

the self-commutated converter (19) is a modular multilevel converter, which suppresses said voltage components both in the AC voltage system and in the DC voltage system (2) and **in that** electric current can flow in both directions through current converter element valves (6) of the system-clocked converter (4) and can be controlled in both directions.

**13.** Method according to Claim 12,
**characterized in that**
the modular multilevel converter (19) at least partly provides the reactive power consumed by the system-clocked converter (4) .

**Revendications**

**1.** Convertisseur (18) hybride, pour transmettre une puissance électrique entre un réseau (2) de tension alternative, conduisant la tension alternative, et un réseau (3) de tension continue, comprenant

- un convertisseur (4) cadencé par le réseau, dont l'interrupteur (9) de puissance à semi-conducteur est conçu pour se fermer une fois dans une période de la tension alternative et qui est connecté à une unité (10) de connexion, pour la connexion du réseau (2) à tension alternative et
- un convertisseur (19) à commutation automatique, qui peut être connecté également audit réseau (2) à tension alternative, qui a des branches (20) de module de phase, ayant des interrupteurs (27, 28, 34, 35) à semi-conducteur de puissance pouvant être tant fermés qu'ouverts, et qui est monté en série avec le convertisseur (4) cadencé par le réseau,

**caractérisé en ce que**
les branches (20) de module de phase disposent d'un circuit série de sous-modules (24), chaque sous-module (24) ayant deux bornes (31, 32) de connexion, un accumulateur (25) d'énergie et un circuit à semi-conducteur de puissance, composé d'interrupteurs (27, 28, 34, 35) à semi-conducteur de puissance pouvant être fermés et ouverts, qui peuvent être commandés de manière à ce que la tension chutant aux bornes de l'accumulateur (25) d'énergie ou une tension nulle chute aux deux bornes (31, 32) de connexion du sous-module (25) respectif et le convertisseur (4) cadencé par le réseau a des soupapes (6) de convertisseur, par lesquelles un flux de courant est rendu possible dans les deux sens et par lesquelles le flux de courant peut être commandé dans les deux sens.

**2.** Convertisseur (18) hybride suivant la revendication 1,
**caractérisé en ce que**
le convertisseur cadencé au réseau est un convertisseur (4) commuté par le réseau, qui a des soupapes (6) de convertisseur, composées d'interrupteurs (9) à semi-conducteur de puissance pouvant être fermés, mais ne pouvant pas être ouverts.

**3.** Convertisseur (18) hybride suivant la revendication 2,
**Caractérisé en ce que**
les soupapes (6) du convertisseur (4) commuté par le réseau sont connectées entre elles en au moins un pont (5) à six impulsions, chaque pont (5) à six impulsions ayant une borne (7) de tension alternative, qui est connectée à l'unité (10) de connexion.

**4.** Convertisseur (18) hybride suivant la revendication 3,
**caractérisé en ce que**
les soupapes (6) du convertisseur (4) commuté par le réseau constituent deux ponts (5) à six impulsions montés en série l'un avec l'autre, chaque pont (5) à six impulsions étant équipé d'une borne (7) de tension alternative, qui est connectée à l'unité (10) de connexion.

**5.** Convertisseur (18) hybride suivant la revendication 4,
**caractérisé en ce que**
l'unité de connexion est un premier transformateur (10), ayant un enroulement (11) primaire et deux enroulements (12, 13) secondaires, chaque enroulement (12, 13) secondaire étant connecté à une borne (7) de tension alternative, du pont (5) à six impulsions respectif.

6. Convertisseur (18) hybride suivant l'une des revendications précédentes,
**caractérisé en ce que**
les branches (20) de module de phase du convertisseur (4) à commutation automatique sont connectées entre elles en un pont (5) à six impulsions, chaque branche (20) de module de phase s'étendant entre une borne (21) de tension alternative et une borne ($8_1$, $8_4$) de tension continue.

7. Convertisseur (18) hybride suivant l'une des revendications précédentes,
**caractérisé en ce que** la borne (21) de tension alternative du convertisseur (19) à commutation automatique est connectée à un enroulement secondaire d'un deuxième transformateur (23).

8. Convertisseur (18) hybride suivant l'une des revendications 1 à 5,
**caractérisé en ce que**
la borne (21) de tension alternative du convertisseur (19) à commutation automatique est connectée à un enroulement secondaire d'un premier transformateur (10), qui a au moins un autre enroulement (12, 13) secondaire, par lequel le premier transformateur (10) est connecté au convertisseur (4) cadencé par le réseau.

9. Convertisseur (18) hybride suivant l'une des revendications précédentes,
**caractérisé en ce que**
chaque sous-module (24) a un circuit (26) série de deux interrupteurs (27, 28) à semi-conducteur de puissance pouvant être fermés et ouverts, qui est monté en parallèle à l'accumulateur (25) d'énergie, une première borne (32) de connexion étant connectée à une borne de l'accumulateur (25) d'énergie et une deuxième borne (31) de connexion à un point de potentiel entre les interrupteurs (27, 28) à semi-conducteur de puissance pouvant être fermés et ouverts.

10. Convertisseur (18) hybride suivant l'une des revendications 1 à 8,
**caractérisé en ce que**
chaque sous-module (25) a quatre interrupteurs (27, 28, 34, 35) à semi-conducteur de puissance, qui constituent, ensemble avec l'accumulateur (25) d'énergie, un circuit en pont complet.

11. Convertisseur (18) hybride suivant l'une des revendications précédentes,
**caractérisé en ce qu'**
une diode (29) de roue libre est montée en parallèle, tête-bêche, à chaque interrupteur (27, 28, 34, 35) à semi-conducteur de puissance pouvant être fermé et ouvert.

12. Procédé de transmission de puissance électrique entre un réseau (2) à tension alternative conduisant la tension alternative et un réseau à tension continue au moyen d'un convertisseur hybride, dans lequel on fait passer des interrupteurs (9) à semi-conducteur de puissance d'un convertisseur (4) cadencé par le réseau, dans une période de la tension alternative, une fois d'une position bloquée, dans laquelle un flux de courant est interrompu par les interrupteurs (9) à semi-conducteur de puissance, en une position passante, dans laquelle un flux de courant est rendu possible par les interrupteurs (9) à semi-conducteur de puissance, et dans lequel un convertisseur (19) à commutation automatique, qui est monté en série avec le convertisseur (4) cadencé par le réseau et qui est connecté au même réseau (2) à tension alternative, supprime des composantes de courant et de tension à une fréquence, qui est un multiple en nombre entier de l'oscillation fondamentale de la tension alternative,
**caractérisé en ce que**
le convertisseur (19) à commutation automatique est un convertisseur modulaire à plusieurs étages, qui supprime ladite composante de tension, tant dans le réseau à tension alternative qu'également dans le réseau (2) à tension continue et **en ce que** du courant électrique peut passer dans les deux sens par des soupapes (6) du convertisseur (4) cadencé par le réseau et peut être commandé dans les deux sens.

13. Procédé suivant la revendication 12,
**caractérisé en ce que**
le convertisseur (19) modulaire à plusieurs étages met à disposition, au moins en partie, la puissance réactive consommée par le convertisseur (4) cadencé par le réseau.

# FIG 1

Stand der Technik

EP 2 707 944 B1

# FIG 2

EP 2 707 944 B1

# FIG 3

# FIG 4

# FIG 5

# FIG 6

## FIG 7

ILCC_A → [ ] → IDIST_A → [ ] → → [ ] → UDIST_A
ILCC_B → IDIST_B → UDIST_B
ILCC_C → IDIST_C → UDIST_C

## FIG 8

ID → [ ] → [ ] → ILCC_A
ILCC_B
ILCC_C

## FIG 9

INET_A → [ ] → UDIST_A
INET_B → UDIST_B
INET_C → UDIST_C

EP 2 707 944 B1

FIG 10

# FIG 11

EP 2 707 944 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10103031

- US 5642275 A

**In der Beschreibung aufgeführte Nicht-Patentliteratur**

- *IEEE Transactions on Power Delivery,* Oktober 1998, vol. 13 (4
- **B. QAHARAMAN ; A. M. GOLE ; L. T. FERNANDO.** Hybrid HVDC Converters and Their Impact on Power System Dynamic Performance. *Power Engineering Society General Meeting,* 2006
- **B. R. ANDERSEN ; LIE XU.** Hybrid HVDC System for Power Transmission to Island Networks. *IEEE Transaction on Power Delivery,* Oktober 2004, vol. 19 (4
- **P. G. BARBOSA ; J. A. SANTISTEBAN ; E. H. WATANABE.** Shunt-series Active Power Filter for Rectifiers AC and DC Sides. *IEE Proceedings Electric Power Applications,* November 1998, vol. 145 (6
- **DAVID R. TRAINER.** A New Hybrid Voltage-Sourced Converter for HVDC Power Transmission. *CIGRE SESSION,* 2010